# EUROPÄISCHE PATENTSCHRIFT

(11) **EP 1 584 838 B1**
(45) Veröffentlichungstag und Bekanntmachung des Hinweises auf die Patenterteilung: **30.05.2007**
(21) Anmeldenummer: 04008489.9
(22) Anmeldetag: 07.04.2004
(51) Int. Cl.: F16F 15/123, F16F 15/134

(54) **Torsionsschwingungsdämpfer**
Torsional vibration damper
Amortisseur de vibrations de torsion

(43) Veröffentlichungstag der Anmeldung: 12.10.2005
(73) Patentinhaber: BorgWarner Inc., Auburn Hills, MI 48326 (US)
(72) Erfinder: Bastel, Norbert, 68794 Rheinhausen (DE); Strauss, Dietmar, 76703 Kraichtal (DE); Kroll, Jürgen, 68775 Ketsch (DE); Ebner, Till, 64319 Pfungstadt (DE); Schaefer, Michael, 68723 Schwetzingen (DE)
(74) Vertreter: Wagner, Kilian

(56) Entgegenhaltungen:
- EP-A- 0 340 608
- US-A- 4 279 132
- US-A- 6 047 804

## Beschreibung

Die Erfindung betrifft einen Torsionsschwingungsdämpfer gemäß dem Oberbegriff des Anspruchs 1.

Torsions- oder Drehschwingungsdämpfer sind in unterschiedlichen Varianten aus verschiedenen Anwendungsbereichen bekannt. Insbesondere werden sie im Kraftfahrzeugbau zur elastischen Kopplung von Verbrennungskraftmaschine und Antriebsstrang eingesetzt. Auf diese Weise soll verhindert werden, dass Schwingungen von der Seite der Verbrennungskraftmaschine auf den Antriebsstrang bzw. das Getriebe übertragen werden. Eine solche Übertragung von Schwingungen ist bei Kraftfahrzeugantrieben vor allen Dingen bei Verbrennungskraftmaschinen mit vergleichsweise wenig Zylindern und bei niedrigen Drehzahlen gegeben. Bei effektiver Dämpfung derartiger Schwingungen kann die Verbrennungskraftmaschine mit niedrigeren Drehzahlen betrieben werden, was im Allgemeinen einen verringerten Kraftstoffverbrauch zur Folge hat und somit sowohl ökonomisch als auch ökologisch von Vorteil ist.

Aus der EP 1 371 875 A1 und der DE 195 22 718 A1 sind Torsionsschwingungsdämpfer mit einem antriebsseitigen Primärelement und einem abtriebsseitigen Sekundärelement bekannt, wobei das Primär- und das Sekundärelement über eine Federeinrichtung miteinander gekoppelt und um eine Neutralposition gegeneinander verdrehbar sind. Primär- wie Sekundärelement umfassen jeweils einen Mitnehmer, welche im Folgenden als Primärmitnehmer bzw. Sekundärmitnehmer bezeichnet werden. Ein antriebsseitig am Primärelement anliegendes Drehmoment wird mittels des Primärmitnehmers zunächst auf die Federeinrichtung und von dort auf den Sekundärmitnehmer des Sekundärelements übertragen.

Die genannte Federeinrichtung besteht üblicherweise aus einem oder mehreren in Umfangsrichtung des Torsionsschwingungsdämpfers hintereinander angeordneten Federelementen, welche vorzugsweise als Schraubenfedern bzw. Schraubenfedersätze ausgeführt sind. Zwischen den Federelementen sind Gleitschuhe angeordnet, welche die aufeinander folgenden Federelemente miteinander verbinden. An den Federeinrichtungen sind beidendseitig Endschuhe angeordnet, welche die Federeinrichtung gegen die jeweiligen Mitnehmer abstützen.

Erfolgt in einem Torsionsschwingungsdämpfer eine Drehmomentübertragung vom mit dem Antrieb verbundenen Primärelement zum abtriebsseitigen Sekundärelement, so wird diese Drehmomentübertragung als Schub bezeichnet. Eine Drehmomentübertragung in die entgegengesetzte Richtung vom Sekundärelement auf das Primärelement wird Zug genannt.

Die zwischen den einzelnen Federelementen angeordneten Gleitschuhe sind an ihrer der Rotationsachse des Torsionsschwingungsdämpfers radial abgewandten Seite mit einer Gleitfläche versehen, die zur Abstützung der Federeinrichtung gegenüber der Wandung des Torsionsschwingungsdämpfers dient. Im Betriebszustand des Torsionsschwingungsdämpfers rotieren die Federeinrichtungen, Primärelement und Sekundärelement sowie die jeweils zugehörigen Mitnehmer um eine gemeinsame Achse. Die dabei auftretenden Fliehkräfte üben auf die Gleitschuhe sowie die Federelemente der Federeinrichtungen eine radial nach außen gerichtete, drehzahlabhängige Kraft aus, welche die Gleitflächen der Gleitschuhe mit zunehmender Drehzahl stärker gegen die die Federeinrichtungen umgebende Abstützfläche des Torsionsschwingungsdämpfers, z. B. eine Gehäusewandung, presst. Infolgedessen stellen sich mit steigender Drehzahl zunehmende Reibungskräfte zwischen den Gleitflächen der Gleitschuhe und der Abstützfläche ein, welche der Bewegung der Federeinrichtung entgegengesetzt gerichtet sind. Hierdurch wird die Funktion des Torsionsschwingungsdämpfers stark beeinträchtigt. Es ergibt sich eine effektive Dämpferkennlinie, deren Steigung aufgrund der durch die beschriebene Fliehkraft beeinflussten Reibungskräfte stark drehzahlabhängig ist.

Der Erfindung liegt somit das Problem zugrunde, die im Betrieb des Torsionsschwingungsdämpfers auftretenden Reibungskräfte zu reduzieren und somit die Steigung der Dämpferkennlinie sowie die Drehzahlabhängigkeit dieser Steigung zu verringern, insbesondere die Steigung der Dämpferkennlinie im Zug-Betrieb, welcher auch als Zugstufe bezeichnet wird.

Aus dem, beispielsweise in der US 4,279,132 oder der US 4,585,427 offenbarten, Stand der Technik ist der Einsatz von sogenannten Dividerblechen anstelle von Gleitschuhen bekannt. Derartige Dividerbleche sind üblicherweise als Ringelemente und daran befestigte Trennelemente ausgebildet, wobei diese Trennelemente anstelle von Gleitschuhen zwischen den Federelementen der Federeinrichtungen angeordnet sind. Zudem sind die Trennelemente am Ringelement des Dividerblechs so angeordnet, dass die im Betrieb des Torsionsschwingungsdämpfers auftretenden und an den jeweiligen Trennelementen angreifenden Zentrifugalkräfte sich in der Summe kompensieren. Darüber hinaus sind die Trennelemente derart dimensioniert, dass sie im Betriebszustand nicht mit anderen Bestandteilen des Torsionsschwingungsdämpfers in reibschlüssigen Kontakt treten. Infolgedessen lässt sich durch die Verwendung von Dividerblechen die oben beschriebene Beeinträchtigung der Dämpferkennlinie durch Reibungskräfte verhindern.

Je nach Einsatzzweck eines Torsionsschwingungsdämpfers stellen sich allerdings unterschiedliche Anforderungen an die Größe der zwischen den Gleitschuhen und der Abstützfläche auftretenden Reibungskräfte bzw. die Dämpferkennlinie. Im Kraftfahrzeugbereich ist beispielsweise eine vollständig reibungsfreie Federanordnung, wie sie ein Torsionsschwingungsdämpfer mit Dividerblechen liefert, nicht erstrebenswert, da es Fahrzustände gibt, welche eine Mindestreibung erfordern.

Bei dieser Art von Dämpfern tritt das zusätzliche Problem auf, dass die Größe der zwischen Gleitschuhen und Abstützfläche auftretenden Reibungskräfte nicht flexibel an den jeweiligen Einsatzzweck anpassbar ist.

Die US 6,047,804 offenbart einen Torsionsschwingungsdämpfer mit Gleitschuhen, an denen sich Dämpfungsfedern abstützen. Bei einem Ausführungsbeispiel ist ein Gleitschuh durch ein Zwischenelement ersetzt, welches von einem Tragring gehalten ist.

Die Aufgabe der Erfindung besteht nunmehr darin, einerseits eine flexible Anpassung der auftretenden Reibungskräfte an den jeweiligen Einsatzzweck zuzulassen und darüber hinaus das Entstehen von Reibungskräften soweit möglich effizient zu verhindern.

Diese Aufgabe wird erfindungsgemäß gelöst durch einen Torsionsschwingungsdämpfer gemäß Anspruch 1.

Die Erfindung geht davon aus, teilweise Trennelemente anstelle von Gleitschuhen zwischen den Federelementen vorzusehen, wobei die Trennelemente in verschiedenen Federeinrichtungen so angeordnet sind, dass sich mindestens eine Gruppe von Trennelementen ergibt, bei welcher die vektorielle Summe der an den Trennelementen dieser Gruppe angreifenden Zentrifugalkräfte den Nullvektor ergibt, und diese Trennelemente starr miteinander verbunden sind. Die einzelnen Trennelemente einer Gruppe von Trennelementen sind jeweils in verschiedenen Federeinrichtungen angeordnet, sodass sich keine starre Verbindung zwischen zwei Trennelementen derselben Federeinrichtung ergibt, wodurch die Federwirkung der zwischen diesen verbundenen Trennelementen liegenden Federelemente zerstört würde. Zudem ist die starre Verbindung zwischen den Trennelementen einer jeweiligen Gruppe so dimensioniert, dass die Trennelemente in radialer Richtung bezogen auf die Drehachse des Primär- bzw. Sekundärelements von einer Abstützfläche für die Gleitschuhe beabstandet sind. Hierdurch wird drehzahlabhängiger Reibschluss zwischen den Trennelementen und der Abstützfläche vermieden.

Durch die Zahl der anstelle von Gleitschuhen vorgesehenen Trennelemente und die Anordnung der Trennelemente in den verschiedenen Federeinrichtungen ist die Größe der resultierenden Reibungskräfte bzw. die Dämpferkennlinie an verschiedenste Einsatzzwecke des Torsionsschwingungsdämpfers flexibel anpassbar.

Die Erfindung sieht weiter vor, die Trennelemente in den verschiedenen Federeinrichtungen jeweils zwischen den schwersten Federelementen anzuordnen. Hierdurch kann das Entstehen von Reibungskräften besonders effizient verhindert werden, da an den schwersten Federelementen bzw. den sie abstützenden Gleitschuhen die größten Zentrifugalkräfte und somit auch die größten Reibungskräfte auftreten.

Eine bevorzugte Ausführungsform der Erfindung sieht vor, dass für mindestens eine Gruppe von Trennelementen zur starren Verbindung der Trennelemente dieser Gruppe ein Ringelement vorgesehen ist, dessen radiale Symmetrieachse mit der Rotationsachse des Primär- bzw. Sekundärelements zusammenfällt. Auf diese Weise lassen sich die Ringelemente der verschiedenen Gruppen von Trennelementen Platz sparend im Torsionsschwingungsdämpfer anordnen.

In einer besonders bevorzugten Ausführungsform der Erfindung sind mindestens ein Ringelement und die mit ihm starr zu verbindenden Trennelemente einstückig gefertigt. Hierdurch ergibt sich eine besonders feste und dauerhafte Verbindung zwischen dem Ringelement und den Trennelementen, sodass die Entstehung von Unwuchten weitestgehend vermieden werden kann.

In einer weiteren Ausführungsform der Erfindung ist vorgesehen, bei mindestens einem Trennelement an dessen der Rotationsachse des Primär- oder Sekundärelements radial abgewandten Seite Abstützflächen für die an das Trennelement angrenzenden Federelemente vorzusehen. Bei Rotation des Torsionsschwingungsdämpfers stützen diese Abstützflächen die an den Federelementen angreifenden, radial nach außen gerichteten Zentrifugalkräfte ab, und reduzieren somit die Belastung auf die Befestigung des Federelements am Trennelement.

Eine vorteilhafte Weiterbildung der Erfindung sieht vor, dass die Ausdehnung mindestens einer Abstützfläche wenigstens eines Trennelements in umfänglicher Richtung so bemessen ist, dass die Stirnseite der Abstützfläche mit dem benachbarten Gleitschuh bzw. dem benachbarten Trennelement oder dessen Abstützfläche in Stoßkontakt tritt, bevor das dazwischen befindliche Federelement zu stark gestaucht wird und dauerhaft Schaden nimmt.

Eine bevorzugte Ausführungsform der Erfindung sieht vor, dass mindestens ein Federelement als Schraubenfeder ausgeführt ist. Alternativ oder ergänzend hierzu kann mindestens ein Federelement aus verschiedenen, ineinander angeordneten Schraubenfedern gebildet sein, von denen wenigstens eine mit mindestens einem Trennelement oder Gleitschuh verbunden ist. Im Falle einer derartigen Anordnung ist von einem Federsatz die Rede. Auf diese Weise lassen sich Federsätze, Federelemente, und somit letztlich auch Federeinrichtungen, herstellen, deren Dämpfungscharakteristik auf die jeweiligen Anforderungen abgestimmt ist.

Eine besonders bevorzugte Ausführungsform der Erfindung sieht vor, dass die verschiedenen Federeinrichtungen in identischer Weise aus Federelementen, Gleit- und Endschuhen sowie Trennelementen aufgebaut sind. Hierdurch lässt sich eine gleichmäßige Belastung der einzelnen Bestandteile der Federeinrichtungen erzielen.

Im Folgenden wird eine Ausführungsform der Erfindung anhand von Figuren näher erläutert. Es zeigen:
- Fig. 1: Explosionsdarstellung eines erfindungsgemäßen Torsionsschwingungsdämpfers mit einem Ringelement;
- Fig. 2: Längsschnitt durch einen Torsionsschwingungsdämpfer;
- Fig. 3: Querschnitt durch die obere Hälfte eines Torsionsschwingungsdämpfers mit zwei Ringelementen;
- Fig. 4: Ausschnitte eines Torsionsschwingungsdämpfers unter verschiedenen Betriebsbedingungen.

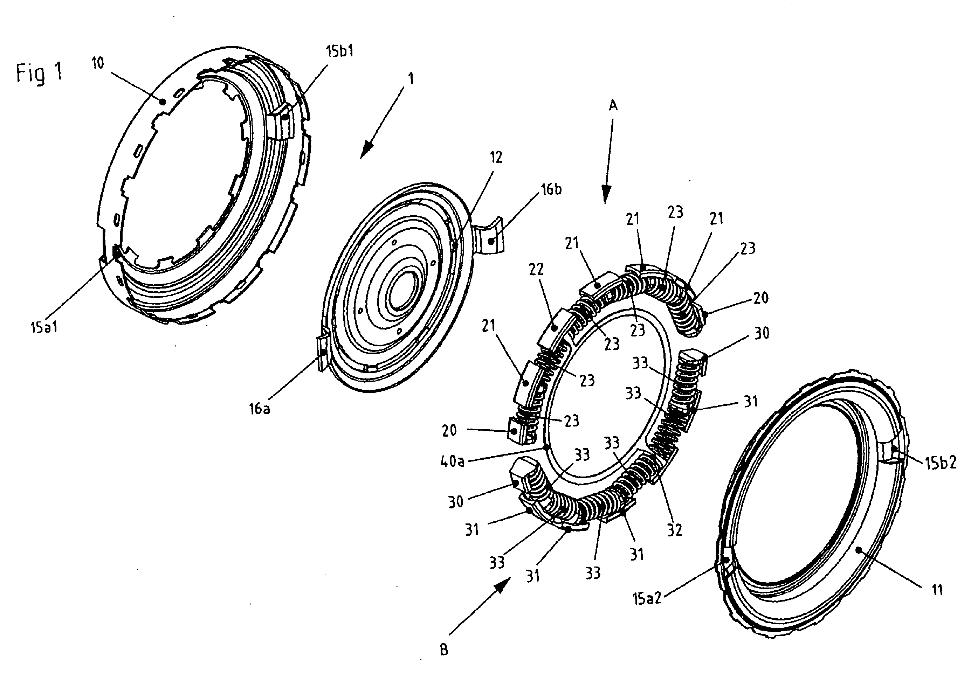

Das Ausführungsbeispiel in Fig. 1 zeigt in Explosionsdarstellung einen erfindungsgemäßen Torsionsschwingungsdämpfer. Das Primärelement wird durch die Mittelscheibe 12 gebildet, an welcher die zwei Mitnehmer des Primärelements 16a und 16b befestigt sind. Die vordere Seitenscheibe 11 und die hintere Seitenscheibe 10 bilden gemeinsam das Sekundärelement, an welchem wiederum zwei Mitnehmer angebracht sind. Wie das Sekundärelement selbst setzen sich diese Mitnehmer des Sekundärelements jeweils aus zwei Teilen zusammen. So gibt es für jeden Mitnehmer des Sekundärelements ein Vorderteil 15a1 und 15b1 sowie ein Hinterteil 15a2 und 15b2. Diese sind jeweils an der vorderen Seitenscheibe 11 oder der hinteren Seitenscheibe 10 befestigt.

Der Torsionsschwingungsdämpfer in Fig. 1 umfasst zwei Federeinrichtungen A und B. Die Federeinrichtung A besteht aus beidendseitig an der Federeinrichtung angebrachten Endschuhen 20, den Federelementen 23 und den Gleitschuhen 21. Die Gleitschuhe 21 sind zwischen den einzelnen Federelementen 23 der Federeinrichtung A angeordnet. An einer Stelle ist anstatt eines Gleitschuhs durch ein Trennelement 22 angeordnet, welches starr mit dem Ringelement 40a verbunden ist.

Dementsprechend besteht die Federeinrichtung B aus den beidseitigen Endschuhen 30, den Federelementen 33, den Gleitschuhen 31, und dem Trennelement 32, welches diametral gegenüberliegend zum Trennelement 22 angeordnet ist. Das Trennelement 32 steht ebenso wie das Trennelement 22 in starrer Verbindung mit dem Ringelement 40a.

Rotiert der Torsionsschwingungsdämpfer, so unterliegen die Federeinrichtungen A und B der Zentrifugalkraft. Die Federelemente 23 und 33 sowie die Gleitschuhe 21 und 31 werden durch sie radial nach außen gedrückt. Im Fall der Trennelemente 22 und 32 hingegen kompensieren sich die jeweils angreifenden Zentrifugalkräfte, da diese über das Ringelement 40a starr miteinander verbunden sind. Sie erfahren somit keine radial nach außen gerichtete Kraft.

Die an den Gleitschuhen 21 und 31 sowie den Federelementen 23 und 33 angreifenden Zentrifugalkräfte werden kompensiert durch eine von der vorderen Seitenscheibe 11 und der hinteren Seitenscheibe 10 gebildeten Abstützfläche, an welcher sich die Gleitschuhe 21 und 31 mit ihrer radial außen liegenden Gleitfläche abstützen. Dabei geraten die Gleitschuhe 21 und 31 in reibschlüssigen Kontakt mit dieser Abstützfläche. Hierbei treten Reibungskräfte auf, welche der Bewegung der Federeinrichtung entgegengerichtet sind und die Dämpferkennlinie des Torsionsschwingungsdämpfers beeinträchtigen. Die beschriebene Beeinträchtigung des Dämpfungsverhaltens durch Reibungskräfte ist umso stärker, je schneller die Federeinrichtung bzw. der gesamte Torsionsschwingungsdämpfer rotieren.

Der Durchmesser des Ringelements 40a ist so bemessen, dass die mit ihm starr verbundenen Trennelemente 22 und 33 nicht mit der Abstützfläche in Berührung kommen. Da sie starr mit dem Ringelement 40a verbunden sind und die an ihnen angreifenden Zentrifugalkräfte einander kompensieren, ist dies auch bei hohen Rotationsgeschwindigkeiten des Torsionsschwingungsdämpfers der Fall. Zwischen den Trennelementen und der Abstützfläche stellen sich somit keine Reibungskräfte ein, welche die Dämpferkennlinie des Torsionsschwingungsdämpfers beeinträchtigen.

Es besteht daher die Möglichkeit, die beschriebenen Reibungskräfte vollständig zu eliminieren, indem jeder Gleitschuh durch ein Trennelement ersetzt wird und jedes Trennelement über ein Ringelement starr mit einem geeigneten Trennelement der anderen Federeinrichtung verbunden wird, sodass sich die an diesen Trennelementen angreifenden Zentrifugalkräfte jeweils kompensieren. Zweckmäßigerweise sind hierbei Trennelemente derselben Federeinrichtung nicht mit ein und demselben Ringelement verbunden, da ansonsten die Dämpfungswirkung der zwischen ihnen liegenden Federelemente ausgeschaltet ist.

Nicht in jedem Anwendungsfall ist eine vollständige Eliminierung der Reibungskräfte wünschenswert. Im Fahrzeugbereich existieren Fahrzustände, in denen eine Mindestrestreibung erwünscht ist. In diesen Fällen ist die sich einstellende Reibungskraft durch die Anzahl der anstelle von Gleitschuhen vorgesehenen Trennelemente, welche in geeigneter Weise über Ringelemente miteinander verbunden sind, flexibel an den jeweiligen Anwendungsfall anpassbar.

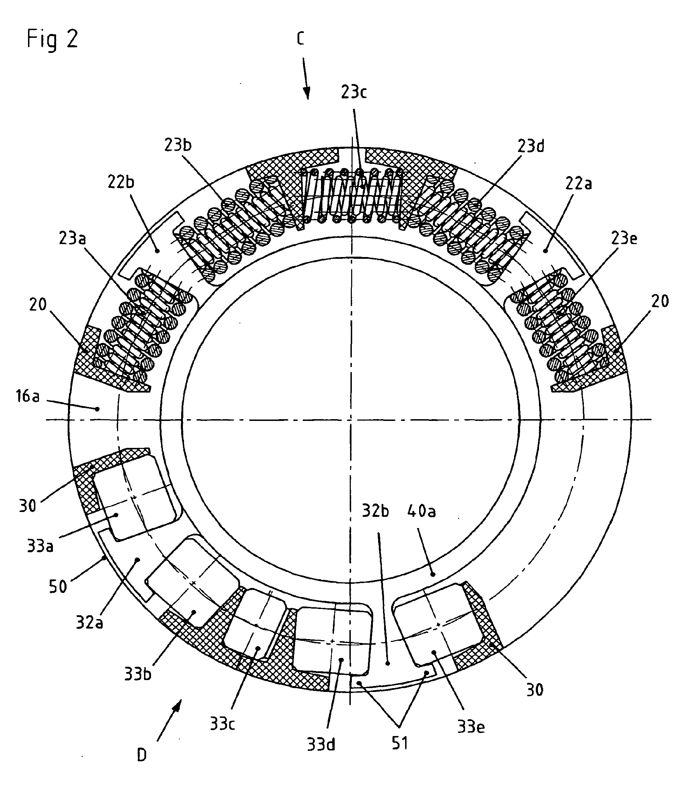

Fig. 2 zeigt einen Längsschnitt durch einen erfindungsgemäßen Torsionsschwingungsdämpfer, welcher die beiden Federeinrichtungen C und D umfasst. Zwischen den Endschuhen 20 und 30 der verschiedenen Federeinrichtungen befinden sich wiederum die Mitnehmer des Primärelements 16a und 16b, wobei der Mitnehmer des Primärelements 16b durch einen Wandungsausschnitt der Seitenscheibe verdeckt ist. Im Gegensatz zu Fig. 1 sind hier in den einzelnen Federeinrichtungen verschiedenartige Federelemente 23a, 23b, 23c, 23d, 23e bzw. 33a, 33b, 33c, 33d und 33e angebracht. Wie bei den Federelementen 23a-23e angedeutet, bestehen diese aus mehreren ineinander angeordneten Schraubenfedern. Darüber hinaus sind in jeder der Federeinrichtungen C und D jeweils an zwei Positionen anstelle von Gleitschuhen die Trennelemente 22a und 22b bzw. 32a und 32b vorgesehen. Die Trennelemente 22a und 32a sind mit dem Ringelement 40a starr verbunden, die Trennelemente 32b und 22b hingegen mit dem Ringelement 40b, welches in der Darstellung von Fig. 2 durch das Ringelement 40a verdeckt wird.

Wie man der Darstellung entnimmt, sind die Durchmesser der Ringelemente 40a und 40b sowie die Abmessungen der Trennelemente 32a, 32b, 22a und 22b in radialer Richtung des Torsionsschwingungsdämpfers so bemessen, dass diese von der Abstützfläche 50 beabstandet sind. Sie treten somit selbst bei hohen Drehzahlen des Torsionsschwingungsdämpfers nicht in reibschlüssigen Kontakt mit der Abstützfläche 50. Gegenüber nur einem Trennelement pro Federeinrichtung führt dies zu einer weiteren Reduktion der Reibungskräfte und der damit verbundenen Beeinträchtigung der Dämpferkennlinie.

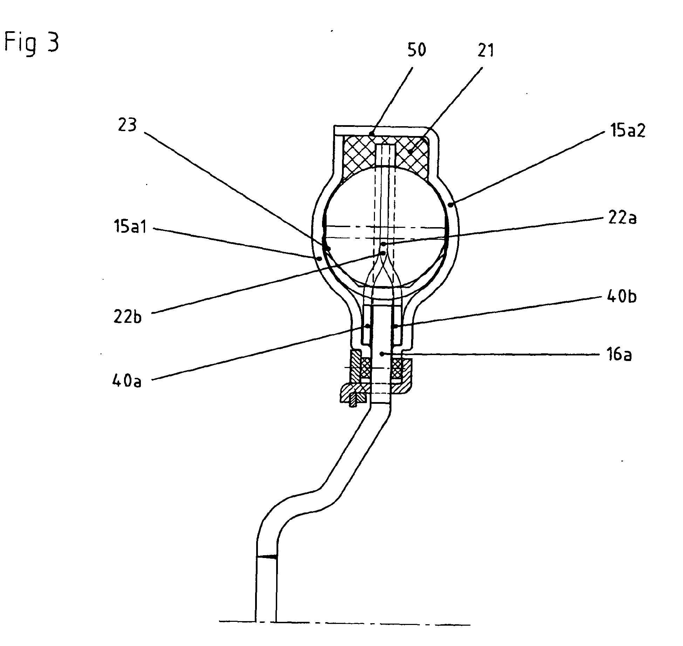

Fig. 3 zeigt einen Querschnitt durch die obere Hälfte eines Torsionsschwingungsdämpfers mit den beiden Ringelementen 40a und 40b, welche mit den jeweils zugehörigen Trennelementen 22a und 22b verbunden und Platz sparend nebeneinander angeordnet sind. Der Darstellung entnimmt man weiterhin den reibschlüssigen Kontakt zwischen dem Gleitschuh 21 und der Abstützfläche für die Gleitschuhe 50, von welcher hingegen die Trennelemente 22a und 22b beabstandet sind.

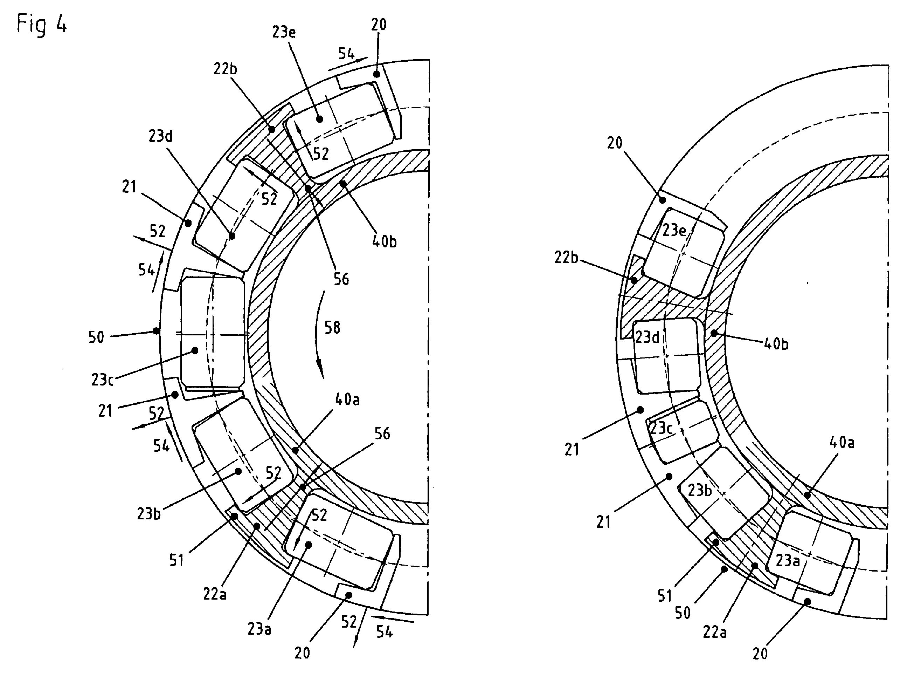

Fig. 4 zeigt einen erfindungsgemäßen Torsionsschwingungsdämpfer unter verschiedenen Betriebsbedingungen. Im einen Fall lastlos (links), im anderen Fall unter Beaufschlagung mit einem Enddrehmoment (rechts).

In der linken Darstellung sind die Federelemente 23a, 23b, 23c, 23d und 23e schemenhaft wiedergegeben. Der Torsionsschwingungsdämpfer rotiere in der durch den Pfeil 58 angegebenen Richtung entgegen dem Uhrzeigersinn. Hierdurch wirkt auf die Gleitschuhe 21, die Trennelemente 22a und 22b sowie die Federelemente 23a, 23b, 23c, 23d und 23e eine nach außen gerichtete Zentrifugalkraft, welche durch die Pfeile 52 symbolisiert wird. Diese drückt die Gleitschuhe 21 gegen die Abstützfläche 50 und verursacht so eine durch die Pfeile 54 symbolisierte Reibungskraft, welche der Bewegung des Torsionsschwingungsdämpfers entgegengerichtet ist.

Die Trennelemente sind mit Abstützflächen für die Federelemente 23a, 23b, 23c, 23d, 23e versehen, über welche Teile der auf sie wirkenden Zentrifugalkräfte auf die Trennelemente 22a und 22b übertragen. Im Gegensatz zu den Gleitflächen 21 werden die Trennelemente nicht gegen die Abstützfläche 50 gedrückt, sondern die auf sie wirkenden Zentrifugalkräfte werden kompensiert durch die Summe der Zentrifugalkräfte, welche auf die anderen mit dem jeweiligen Ringelement 40a bzw. 40b verbundenen Trennelemente wirken. Die Richtung der kompensierenden Summe von Zentrifugalkräften ist jeweils durch einen Pfeil 56 gekennzeichnet.

Die rechte Darstellung in Fig. 4 zeigt den Torsionsschwingungsdämpfer unter Beaufschlagung mit einem maximalen Drehmoment. Neben einer wesentlich stärkeren Stauchung der Federelemente verglichen mit der linken Darstellung ist zu erkennen, dass die Trennelemente 22a und 22b auch in diesem Betriebszustand von der Abstützfläche 50 beabstandet sind und somit keine Reibungskräfte zwischen ihnen und der Abstützfläche 50 entstehen.

### Bezugszeichenliste

- 10: hintere Seitenscheibe (Sekundärelement)
- 11: vordere Seitenscheibe (Sekundärelement)
- 12: Mittelscheibe (Primärelement)
- 15a1: Mitnehmer Sekundärelement (Vorderteil)
- 15b1: Mitnehmer Sekundärelement (Vorderteil)
- 15a2: Mitnehmer Sekundärelement (Hinterteil)
- 15b2: Mitnehmer Sekundärelement (Hinterteil)
- 16a: Mitnehmer Primärelement
- 16b: Mitnehmer Primärelement

- 20: Endschuh Federeinrichtung A
- 21: Gleitschuh Federeinrichtung A
- 22: Trennelement Federeinrichtung A
- 23: Federelement Federeinrichtung A

- 30: Endschuh Federeinrichtung B
- 31: Gleitschuh Federeinrichtung B
- 32: Trennelement Federeinrichtung B
- 33: Federelement Federeinrichtung B

- 40a: Ringelement
- 40b: Ringelement

- 50: Abstützfläche für Gleitschuhe
- 51: Abstützfläche für Federelemente
- 52: Richtung Zentrifugalkraft
- 54: Richtung Reibungskraft
- 56: Richtung Kompensationskraft
- 58: Rotationsrichtung des Torsionsschwingungsdämpfers

- 23a: Federelement Federeinrichtung C
- 23b: Federelement Federeinrichtung C
- 23c: Federelement Federeinrichtung C
- 23d: Federelement Federeinrichtung C
- 23e: Federelement Federeinrichtung C

- 33a: Federelement Federeinrichtung D
- 33b: Federelement Federeinrichtung D
- 33c: Federelement Federeinrichtung D
- 33d: Federelement Federeinrichtung D
- 33e: Federelement Federeinrichtung D

- A: Federeinrichtung A
- B: Federeinrichtung B
- C: Federeinrichtung C
- D: Federeinrichtung D

## Patentansprüche

1. Torsionsschwingungsdämpfer mit aus mehreren Federelementen (23, 33) bestehenden Federeinrichtungen (A, B, C, D) zur federelastischen Kopplung eines antriebsseitigen Primärelements (12) mit einem abtriebsseitigen Sekundärelement (10, 11) sowie Gleitschuhen (21, 31) zur Beabstandung benachbarter Federelemente (23, 33), wobei teilweise anstelle von Gleitschuhen (21, 31) Trennelemente (22, 32) zur Beabstandung benachbarter Federelemente (23, 33) vorgesehen sind, wobei die Trennelemente (22, 32) so angeordnet sind, dass sich mindestens eine Gruppe von Trennelementen (22, 32) ergibt, bei welcher die vektorielle Summe der an den Trennelementen (22, 32) dieser Gruppe angreifenden Zentrifugalkräfte den Nullvektor ergibt, und diese Trennelemente (22, 32) starr miteinander verbunden sind,
**dadurch gekennzeichnet, dass** in den einzelnen Federeinrichtungen (A, B, C, D) verschiedenartige Federelemente (23a, 23b, 23c, 23d, 23e, 33a, 33b, 33c, 33d, 33e) angebracht sind und dass die Trennelemente (22, 32) in den verschiedenen Federeinrichtungen (A, B, C, D) jeweils zwischen den schwersten Federelementen (23a, 23b, 23d, 23e; 33a, 33b, 33d, 33e) angeordnet sind.

2. Torsionsschwingungsdämpfer nach Anspruch 1,
**dadurch gekennzeichnet, dass** für mindestens eine Gruppe von Trennelementen (22, 32) zur starren Verbindung der Trennelemente (22, 32) dieser Gruppe ein Ringelement (40a) vorgesehen ist, dessen radiale Symmetrieachse mit der Rotationsachse des Primär-(12) bzw. Sekundärelements (10, 11) zusammenfällt.

3. Torsionsschwingungsdämpfer nach einem der Ansprüche 1 oder 2,
**dadurch gekennzeichnet, dass** mindestens ein Ringelement (40a) und die mit ihm starr verbundenen Trennelemente (22, 32) einstückig gefertigt sind.

4. Torsionsschwingungsdämpfer nach einem der Ansprüche 1 bis 3,
**dadurch gekennzeichnet, dass** bei mindestens einem Trennelement (32b) an dessen der Drehachse des Primär- (12) oder Sekundärelements (10, 11) radial abgewandten Seite Abstützflächen (51) für die Federelemente (33d, 33e) ausgebildet sind.

5. Torsionsschwingungsdämpfer nach einem der Ansprüche 1 bis 4,
**dadurch gekennzeichnet, dass** die Ausdehnung mindestens einer Abstützfläche (51) wenigstens eines Trennelements (32b) in umfänglicher Richtung so bemessen ist, dass die Stirnseite der Abstützfläche (51) mit dem benachbarten Gleitschuh bzw. dem benachbarten Trennelement oder dessen Abstützfläche (51) in Stoßkontakt tritt, bevor die Federelemente (33d, 33e) beschädigt werden.

6. Torsionsschwingungsdämpfer nach einem der Ansprüche 1 bis 5,
**dadurch gekennzeichnet, dass** mindestens ein Federelement (23, 33) als Schraubenfeder ausgeführt ist.

7. Torsionsschwingungsdämpfer nach einem der Ansprüche 1 bis 6,
**dadurch gekennzeichnet, dass** mindestens ein Federelement (23a, 23b) aus verschiedenen, ineinander angeordneten Schraubenfedern gebildet ist, von denen wenigstens eine mit mindestens einem Trennelement (22a) oder einem Gleitschuh verbunden ist.

8. Torsionsschwingungsdämpfer nach einem der Ansprüche 1 bis 7,
**dadurch gekennzeichnet, dass** die verschiedenen Federeinrichtungen (A, B) in identischer Weise aus Federelementen (23, 33), Gleit- (21, 31) und Endschuhen (20, 30) sowie Trennelementen (22, 32) aufgebaut sind.

## Claims

1. A torsional vibration damper having spring devices (A, B, C, D) comprising a plurality of spring elements (23, 33) for resiliently coupling a drive-end primary element (12) to an output-end secondary element (10, 11) and guide shoes (21, 31) for spacing adjacent spring elements (23, 33), separating elements (22, 32) sometimes being provided in place of guide shoes (21, 31) for the purpose of spacing adjacent spring elements (23, 33), the separating elements (22, 32) being arranged to produce at least one group of separating elements (22, 32) in which the vectorial sum of the centrifugal forces acting on the separating elements (22, 32) of this group gives the zero vector, and these separating elements (22, 32) being rigidly connected to one another,
**characterised in that** various spring elements (23a, 23b, 23c, 23d, 23e, 33a, 33b, 33c, 33d, 33e) are mounted in the individual spring devices (A, B, C, D) and **in that** the separating elements (22, 32) in the various spring devices (A, B, C, D) are each arranged between the heaviest spring elements (23a, 23b, 23d, 23e; 33a, 33b, 33d, 33e).

2. A torsional vibration damper according to Claim 1,
**characterised in that**, for at least one group of separating elements (22, 32), a ring element (40a) is provided for rigidly connecting the separating elements (22, 32) of this group, the radial axis of symmetry of said ring element coinciding with the axis of rotation of the primary (12) or secondary element (10, 11).

3. A torsional vibration damper according to one of Claims 1 and 2,
**characterised in that** at least one ring element (40a) and the separating elements (22, 32) rigidly connected thereto are manufactured in one piece.

4. A torsional vibration damper according to one of Claims 1 to 3,
**characterised in that**, in the case of at least one separating element (32b), supporting faces (51) for the spring elements (33d, 33e) are constructed on its side which is radially remote from the axis of rotation of the primary (12) or secondary element (10, 11).

5. A torsional vibration damper according to one of Claims 1 to 4,
**characterised in that** the extent of at least one supporting face (51) of at least one separating element (32b) in the circumferential direction is dimensioned such that the end face of the supporting face (51) comes into impact contact with the adjacent guide shoe or the adjacent separating element or its supporting face (51) before the spring elements (33d, 33e) are damaged.

6. A torsional vibration damper according to one of Claims 1 to 5,
**characterised in that** at least one spring element (23, 33) is constructed as a helical spring.

7. A torsional vibration damper according to one of Claims 1 to 6,
**characterised in that** at least one spring element (23a, 23b) is formed from different helical springs which are arranged inside one another and of which at least one is connected to at least one separating element (22a) or a guide shoe.

8. A torsional vibration damper according to one of Claims 1 to 7,
**characterised in that** the different spring devices (A, B) are constructed in identical manner from spring elements (23, 33), guide shoes (21, 31) and end shoes (20, 30) and also separating elements (22, 32).

## Revendications

1. Amortisseur de vibrations de torsion avec des dispositifs élastiques (A, B, C, D) composés de plusieurs éléments élastiques (23, 33) pour assurer le couplage, avec l'élasticité d'un ressort, d'un élément primaire (12) côté menant avec un élément secondaire (10, 11) côté mené, ainsi que des patins de glissement (21, 31) pour maintenir l'espacement d'éléments élastiques (23, 33) voisins, sachant que, en partie, au lieu des patins de glissement (21, 31) sont prévus des éléments séparateurs (22, 32) pour maintenir l'espacement d'éléments élastiques (23, 33) voisins, sachant que les éléments séparateurs (22, 32) sont disposés de manière qu'on obtienne au moins un groupe d'éléments séparateurs (22, 32) pour lequel la somme vectorielle des efforts centrifuges, agissant sur les éléments séparateurs (22, 32) de ce groupe, donne le vecteur nul et ces éléments séparateurs (22, 32) sont reliés rigidement ensemble,
**caractérisé en ce que**, dans les différents éléments élastiques (A, B, C, D), sont montés des éléments élastiques (23a, 23b, 23c, 23d, 23e, 33a, 33b, 33c, 33d, 33e) de différents types, et **en ce que** les éléments séparateurs (22, 32), dans les différents dispositifs élastiques (A, B, C, D), sont disposés chaque fois entre les éléments élastiques (23a, 23b, 23c, 23d, 23e, 33a, 33b, 33c, 33d, 33e) les plus lourds.

2. Amortisseur de vibrations de torsion selon la revendication 1,
**caractérisé en ce que**, pour au moins un groupe d'éléments séparateurs (22, 32), pour obtenir une liaison rigide des éléments séparateurs (22, 32) de ce groupe, est prévu un élément annulaire (40a), dont l'axe de symétrie radial coïncide avec l'axe de rotation de l'élément primaire (12) ou secondaire (10, 11).

3. Amortisseur de vibrations de torsion selon l'une des revendications 1 ou 2,
**caractérisé en ce qu'**au moins un élément annulaire (40a), et les éléments séparateurs (22, 32) lui étant reliés rigidement, sont fabriqués d'une seule pièce.

4. Amortisseur de vibrations de torsion selon l'une des revendications 1 à 3,
**caractérisé en ce que**, dans le cas d'au moins un élément séparateur (32b), sur sa face, opposée radialement à l'axe de rotation de l'élément primaire (12) ou secondaire (10, 11), sont réalisées des surfaces d'appui (51) pour des éléments élastiques (33d, 33e).

5. Amortisseur de vibrations de torsion selon l'une des revendications 1 à 4,
**caractérisé en ce que** l'étendue d'au moins une surface d'appui (51) d'au moins un élément de séparation (32b), en direction périphérique, est de dimension telle que la face frontale de la surface d'appui (51) entre en contact de butée avec le patin de glissement voisin ou l'élément séparateur voisin, ou sa surface d'appui (51), avant que les éléments élastiques (33d, 33e) soient endommagés.

6. Amortisseur de vibrations de torsion selon l'une des revendications 1 à 5,
**caractérisé en ce qu'**au moins un élément élastique (23, 33) est réalisé sous la forme de ressort hélicoïdal.

7. Amortisseur de vibrations de torsion selon l'une des revendications 1 à 6,
**caractérisé en ce qu'**au moins un élément élastique (23a, 23b) est formé de différents ressorts hélicoïdaux disposés les uns derrière les autres, dont au moins l'un est relié à au moins un élément séparateur (22a), ou à un patin de glissement.

8. Amortisseur de vibrations de torsion selon l'une des revendications 1 à 7,
**caractérisé en ce que** les différents dispositifs élastiques (A, B) sont composés, de manière identique, d'éléments élastiques (23, 33), de patins de glissement (21, 31) et de patins d'extrémité (20, 30), ainsi que d'éléments séparateurs (22, 32).
